# EUROPEAN PATENT APPLICATION

(11) **EP 3 771 250 A1**
(43) Date of publication of application: **27.01.2021**
(21) Application number: 19770984.3
(22) Date of filing: 08.03.2019
(51) Int. Cl.: H04W 24/02

(54) **CONFIGURATION METHOD AND APPARATUS**

(30) Priority: 19.03.2018 CN 201810225958
(71) Applicant: Vivo Mobile Communication Co., Ltd., Dongguan, Guangdong 523860 (CN)
(72) Inventor: WU, Yumin, Dongguan, Guangdong 523860 (CN)
(74) Representative: Conti, Marco
(86) International application number: PCT/CN2019/077419
(87) International publication number: WO 2019/179316

(57) **Abstract**

A configuration method and device are provided. The method includes: receiving a first message transmitted by a network side, wherein the first message includes configuration information of one or more target cells; transmitting a second message to the network side according to the configuration information of the one or more target cells, wherein the second message indicates whether the UE successfully accepts the configuration information of the one or more target cells.

## Description

### CROSS-REFERENCE TO RELATED APPLICATIONS

The present application claims a priority to Chinese Patent Application No.201810225958.9 filed in China on March 19, 2018, the disclosure of which is incorporated herein by reference in its entirety.

### TECHNICAL FIELD

The embodiments of the present disclosure relate to the field of communications technologies, and in particular to a configuration method and device.

### BACKGROUND

With development of mobile communication technologies, more and more technologies have been introduced to improve communication efficiency. Examples are provided below.

### 1. Introduction to conditional handover (Conditional Handover):

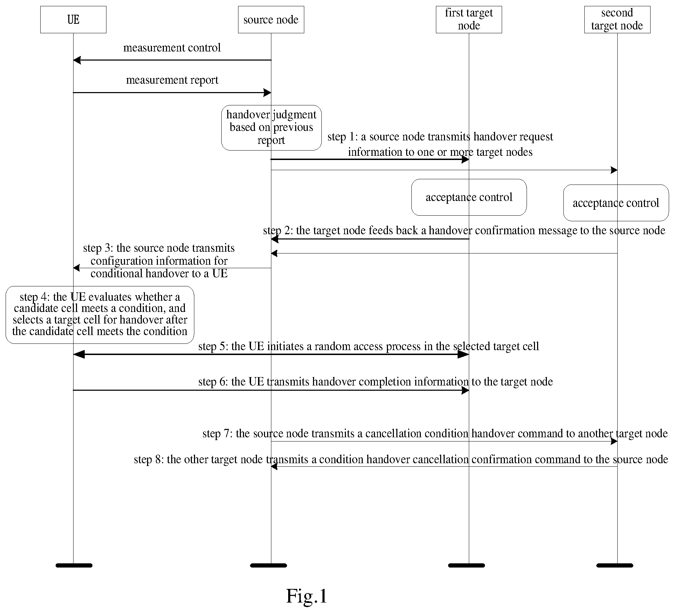

Referring to Fig.1, main steps of a conditional handover process in the related art are as follows.
Step 1: a source node transmits handover request information to one or more target nodes.
Step 2: the target node feeds back a handover confirmation message to the source node.
Step 3: the source node transmits configuration information for conditional handover to a user equipment (User Equipment, UE).
Step 4: the UE evaluates whether a candidate cell meets a condition, and selects a target cell for handover after the candidate cell meets the condition. This process can be referred to as the conditional handover with respect to the UE.
   The conditional handover means that a network side configures trigger condition of the UE and configuration information of the target cell, and after the UE evaluates that the configured trigger condition is satisfied, a handover operation is performed on the target cell according to the configuration information of the target cell configured by the network. The evaluation of the trigger condition by the UE may include the evaluation of a measurement result of one or more cells by the UE. For example, a value of a measurement result of a certain cell meets a configured threshold.
   The configuration information of the target cell is a configuration of a corresponding target cell when the handover operation is performed on the target cell after the UE meets the trigger condition.
Step 5: the UE initiates a random access process in the selected target cell.
Step 6: the UE transmits handover completion information to the target node.
Step 7: the source node transmits a cancellation condition handover command to another target node.
Step 8: the other target node transmits a condition handover cancellation confirmation command to the source node.

### 2. Introduction to dual connectivity (Dual Connectivity, DC):

In a fifth-generation (Fifth-Generation, 5G) mobile communication technology system, the UE adopts a DC architecture (including two cell groups: a master cell group (Master Cell Group, MCG) and a secondary cell group (Secondary Cell Group, SCG)), and the MCG corresponds to a master node (Master Node, MN) on the network side, and the SCG corresponds to a secondary node (Secondary Node, SN) on the network side. The MCG includes: a primary cell (Primary Cell, PCell) and a secondary cell (Secondary Cell, SCell), and the SCG includes: a primary secondary cell (Primary Secondary Cell, PSCell) and the SCell. The PCell and the PSCell can also be collectively referred to as a special cell (Special Cell, SpCel).

In the related art, after the network side configures for the UE a way to manage (for example, add, delete, or change, etc.) the cell after the condition is triggered, the network side may contain configuration information of multiple different target cells. A problem that needs to be solved is how the UE generates a confirmation message (for example, success or failure of applying the configuration information of the target cell) and feeds it back to the network side.

### SUMMARY

An object of the embodiments of the present disclosure is to provide a configuration method and device to solve the problem of how the UE generates a confirmation message and feeds it back to the network side when the network side includes configuration information of the multiple different target cells.

In a first aspect, a configuration method is provided, which is operable by a UE and including: receiving a first message transmitted by a network side, wherein the first message includes configuration information of one or more target cells; transmitting a second message to the network side according to the configuration information of the one or more target cells, wherein the second message indicates whether the UE successfully accepts the configuration information of the one or more target cells.

In a second aspect, a configuration method is further provided, which is operable by a source node and including: transmitting a first message to a UE after receiving configuration information of one or more target cells, wherein the first message includes the configuration information of the one or more target cells; receiving a second message transmitted by the UE according to the configuration information of the one or more target cells, wherein the second message indicates whether the UE successfully accepts the configuration information of the one or more target cells.

In a third aspect, a configuration method is further provided, which is operable by the target node and including: receiving a second message transmitted by a source node, wherein the second message indicates whether a UE successfully accepts configuration information of one or more target cells, and/or the second message indicates whether the UE successfully accepts configuration information of a current serving cell.

In a fourth aspect, a UE is further provided, including: a first receiving module, used to receive a first message transmitted by a network side, wherein the first message includes configuration information of one or more target cells; a first transmitting module, used to transmit a second message to the network side according to the configuration information of the one or more target cells, wherein the second message indicates whether the UE successfully accepts the configuration information of the one or more target cells.

In a fifth aspect, a source node is further provided, including: a second transmitting module, used to transmit a first message to a UE after receiving configuration information of one or more target cells, wherein the first message includes the configuration information of the one or more target cells; a second receiving module, used to receive a second message transmitted by the UE according to the configuration information of the one or more target cells, wherein the second message indicates whether the UE successfully accepts the configuration information of the one or more target cells.

In a sixth aspect, a target node is further provided, including: a fourth receiving module, used to receive a second message transmitted by a source node, wherein the second message indicates whether a UE successfully accepts configuration information of one or more target cells, and/or the second message indicates whether the UE successfully accepts configuration information of a current serving cell.

In a seventh aspect, a UE is further provided, including: a processor, a memory, and a computer program stored in the memory and capable of being executed by the processor, wherein the processor is used to execute the computer program to implement the steps of the configuration method described above.

In an eighth aspect, a network side device is further provided, including: a processor, a memory, and a computer program stored in the memory and capable of being executed by the processor, wherein the processor is used to execute the computer program to implement the steps of the configuration method described in the second aspect or the third aspect.

In a ninth aspect, a computer-readable storage medium is further provided, and a computer program is stored in the computer-readable storage medium, wherein the computer program is used to be executed by a processor to implement the steps of the configuration method according to the first aspect, the second aspect, or the third aspect.

In this way, the network side and a UE side can have a consistent understanding of the configuration information of the target cell.

### BRIEF DESCRIPTION OF THE DRAWINGS

Various other advantages and benefits will become apparent to a person skilled in the art upon reading the detailed description of the preferred embodiments below. The accompanying drawings are only for the purpose of illustrating the preferred embodiments and are not considered to be a restriction on the present disclosure. Moreover, same reference numerals are used to represent same parts throughout the accompanying drawings. In the drawings:
Fig. 1 is a schematic diagram of conditional handover in the related art;
Fig.2 is a schematic structural diagram of a wireless communication system according to an embodiment of the present disclosure;
Fig.3 is a first flowchart of a configuration method according to an embodiment of the present disclosure;
Fig.4 is a second flowchart of the configuration method according to an embodiment of the present disclosure;
Fig.5 is a third flowchart of the configuration method according to an embodiment of the present disclosure;
Fig.6 is a fourth flowchart of the configuration method according to an embodiment of the present disclosure;
Fig.7 is a first schematic structural diagram of a UE according to an embodiment of the present disclosure;
Fig.8 is a schematic structural diagram of a source node according to an embodiment of the present disclosure;
Fig.9 is a schematic structural diagram of a target node according to an embodiment of the present disclosure;
Fig.10 is a second structural diagram of the UE according to an embodiment of the present disclosure;
Fig.11 is a schematic structural diagram of a network side device according to an embodiment of the present disclosure.

### DETAILED DESCRIPTION

Technical solutions in the embodiments of the present disclosure will be described clearly and completely below in combination with the accompanying drawings in the embodiments of the present disclosure. Obviously, the described embodiments merely relate to a part of, rather than all of, the embodiments of the present disclosure. Based on the embodiments in the present disclosure, all other embodiments obtained by a person skilled in the art without creative efforts also fall within the protection scope of the present disclosure.

The term "include" and any variants thereof in the specification and the claims of this application are intended to cover non-exclusive inclusions, for example, processes, methods, systems, products, or devices that include a series of steps or units need not be limited to those steps or units that are explicitly listed, but may include other steps or units that are not explicitly listed or that are inherent to these processes, methods, products, or devices. In addition, the term "and/or" that used in the specification and the claims indicates at least one of associated objects; for example, A and/or B indicates individual A, individual B, or both A and B.

In the embodiments of the present disclosure, such word as "exemplary" or "for example" is used as an example, illustration, or description. Any embodiment or design described as "exemplary" or "for example" in the embodiments of the present disclosure should not be construed as more preferred or advantageous over other embodiments or designs. Specifically, use of words such as "exemplary" or "for example" is intended to present related concepts in a concrete manner.

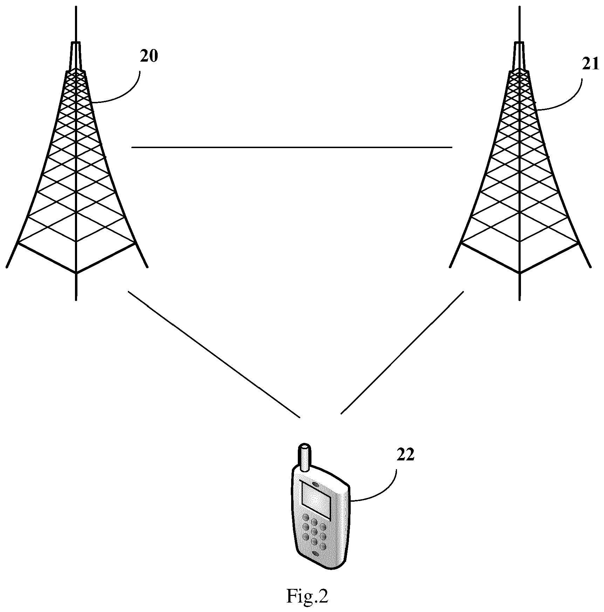

The embodiments of the present disclosure will be described below in conjunction with the accompanying drawings. A configuration method and device provided by the embodiments of the present disclosure may be applied to a wireless communication system. The wireless communication system may be a 5G system, an evolved long term evolution (Evolved Long Term Evolution, eLTE) system, or a subsequent evolved communication system. Refer to Fig.2, a schematic structural diagram of a wireless communication system provided by an embodiment of the present disclosure is shown. As shown in Fig.2, the wireless communication system may include: a first network side device 20, a second network side device 21, and a UE. For example, the UE is denoted as UE 22, and the UE 22 may communicate with the first network side device 20 and the second network side device 21. In a practical application, a connection between the above devices may be a wireless connection. In order to conveniently and intuitively represent a connection relationship between various devices, a solid line is used in Fig.2 for illustration.

It should be noted that the above communication system may include a plurality of UEs, and a network side device may communicate with the plurality of UEs by transmitting signaling or transmitting data.

The first network side device 20 and the second network side device 21 provided by the embodiments of the present disclosure may be a source base station and a target base station respectively during a handover process. The base station may be a commonly used base station, or an evolved node base station (Evolved Node Base station, eNB), or a network side device in a 5G system (for example, a next generation node base station (next generation Node Base station, gNB) or a transmission and reception point (Transmission and Reception Point, TRP)) and another device. Alternatively, the first network side device 20 and the second network side device 21 provided by the embodiments of the present disclosure are a source SN and a target SN in a DC; or the first network side device 20 and the second network side device 21 provided by the embodiments of the present disclosure are a source MN and a target SN in the DC.

The UE provided in the embodiments of the present disclosure may be a mobile phone, a tablet computer, a notebook, an ultra-mobile personal computer (Ultra-Mobile Personal Computer, UMPC), a netbook, or a personal digital assistant (Personal Digital Assistant, PDA), etc.

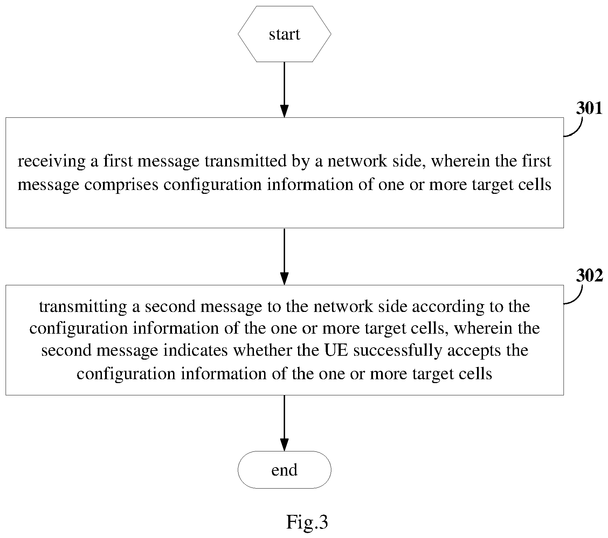

Referring to Fig.3, which shows a flow of a configuration method according to an embodiment of the present disclosure. The method is executed by the UE, and specific steps thereof are as follows.

Step 301: receiving a first message transmitted by a network side, wherein the first message includes configuration information of one or more target cells;

In the embodiments of the present disclosure, the configuration information of each target cell corresponds to one or more trigger conditions for adopting (or successfully accepting) the configuration information of the target cell;

In the embodiments of the present disclosure, the network side in step 301 may refer to a source node.

In the embodiments of the present disclosure, the above first message may also be referred to as a reconfiguration message, such as a radio resource control (Radio Resource Control, RRC) reconfiguration message.

Step 302: transmitting a second message to the network side according to the configuration information of the one or more target cells, wherein the second message indicates whether the UE successfully accepts the configuration information of the one or more target cells.

In the embodiments of the present disclosure, optionally, the first message further includes configuration information of a current serving cell, and the second message further indicates whether the UE successfully accepts the configuration information of the current serving cell.

In the embodiments of the present disclosure, the above second message may also be referred to as a reconfiguration completion message, such as an RRC reconfiguration completion message.

In the embodiments of the present disclosure, the network side in step 302 may refer to a source node and a target node. The source node and the target node may be a source base station and a target base station respectively during a handover process, or a source SN and a target SN in a DC; or a source MN and a target SN in the DC.

In this way, the network side and a UE side can have a consistent understanding of the configuration information of the target cell and/or the configuration information of the current serving cell.

In the embodiments of the present disclosure, optionally, indication information in the second message includes one or any combination of: first indication information indicating whether the UE successfully accepts the first message; second indication information indicating whether the UE successfully accepts the configuration information of the current serving cell; third indication information indicating whether the UE successfully accepts configuration information of all target cells; one or more pieces of fourth indication information, wherein each piece of fourth indication information indicates whether the UE successfully accepts configuration information of a respective one of the target cells.

In the embodiments of the present disclosure, optionally, the second message includes a first information container including the third indication information.

In the embodiments of the present disclosure, optionally, the second message includes one or more second information containers, each of which includes a respective one of the pieces of fourth indication information.

In the embodiments of the present disclosure, optionally, the first message further includes the configuration information of the current serving cell.

In the embodiments of the present disclosure, optionally, transmitting the second message to the network side in step 304 includes: determining whether the UE meets a trigger condition for successfully accepting the configuration information of the target cell; in the case that the UE meets the trigger condition for successfully accepting the configuration information of the target cell, transmitting the second message to the target node when initiating an accessing process to the target cell. The second message indicates that the UE successfully accepts the configuration information of the target cell corresponding to the trigger condition.

In the embodiments of the present disclosure, optionally, transmitting the second message to the target node includes: a first mode of generating the second message according to configuration information of a target cell corresponding to the trigger condition using the configuration information of the target cell, and transmitting the second message to the target node; a second mode of selecting, according to the configuration information of the target cell corresponding to the trigger condition using the configuration information of the target cell, a corresponding second message from a plurality of second messages stored by the UE, and transmitting the second message selected by the UE to the target node.

It should be noted that when transmitting the second message selected by the UE to the target node, or after transmitting the second message selected by the UE to the target node, or before transmitting the second message selected by the UE to the target node, the method further includes: determining, according to the configuration information of the target cell corresponding to the trigger condition using the configuration information of the target cell, another second message other than the second message selected by the UE from the plurality of second messages stored by the UE; deleting the other second message.

In this way, it can be realized that after adopting a mode of conditional triggering to manage the cell, the UE side feeds back a corresponding configuration confirmation message to the network side according to a certain trigger condition in a process phase agreed by a protocol, so that the network side and the UE have a consistent understanding of the configuration.

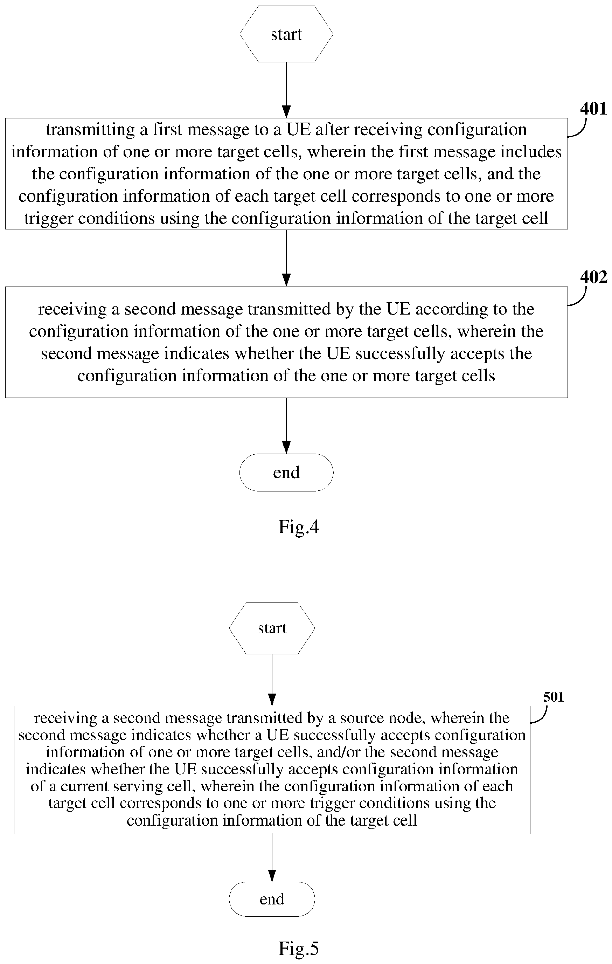

Referring to Fig.4, which shows a flow of a configuration method according to an embodiment of the present disclosure. The method is executed by the source node, and specific steps thereof are as follows.

Step 401: transmitting a first message to a UE after receiving configuration information of one or more target cells, wherein the first message includes the configuration information of the one or more target cells, and the configuration information of each target cell corresponds to one or more trigger conditions using the configuration information of the target cell;

In the embodiments of the present disclosure, the source node and the target node may be respectively a source base station and a target base station during a handover process, or a source SN and a target SN in a DC; or a source MN and a target SN in the DC.

Step 402: receiving a second message transmitted by the UE according to the configuration information of the one or more target cells, wherein the second message indicates whether the UE successfully accepts the configuration information of the one or more target cells.

Optionally, the first message further includes configuration information of a current serving cell, and the second message further indicates whether the UE successfully accepts the configuration information of the current serving cell.

In the embodiments of the present disclosure, the above first message may also be referred to as a reconfiguration message, such as a radio resource control (Radio Resource Control, RRC) reconfiguration message.

In the embodiments of the present disclosure, the above second message may also be referred to as a reconfiguration completion message, such as an RRC reconfiguration completion message.

In the embodiments of the present disclosure, optionally, the indication information in the second message includes one or any combination of: first indication information indicating whether the UE successfully accepts the first message; second indication information indicating whether the UE successfully accepts the configuration information of the current serving cell; third indication information indicating whether the UE successfully accepts configuration information of all target cells; one or more pieces of fourth indication information, wherein each piece of fourth indication information indicates whether the UE successfully accepts configuration information of a respective one of the target cells.

In the embodiments of the present disclosure, optionally, the second message includes a first information container including the third indication information.

In the embodiments of the present disclosure, optionally, the second message includes one or more second information containers, each of which includes a respective one of the pieces of fourth indication information.

In the embodiments of the present disclosure, optionally, the first message further includes the configuration information of the current serving cell.

In the embodiments of the present disclosure, optionally, the method further includes: determining the second message that is transmitted to the target node for the configuration information of the target cell; transmitting, to the target node, the second message indicating whether the configuration information of the target cell is successfully accepted. For example, transmitting a third message to the target node, wherein the third message includes a third information container, and the third information container includes the second message indicating whether the configuration information of the target cell is successfully accepted.

In the embodiments of the present disclosure, optionally, when the second message indicates that the UE does not successfully accept the configuration information of the one or more target cells, the method further includes one or any combination of: notifying the target node to release a first resource, wherein the first resource is reserved for the UE and corresponds to the configuration information of the one or more target cells that is not successfully accepted; and re-executing a process of negotiating configuration information of a new target cell between the source node and the target node.

In this way, it can be realized that after adopting a mode of conditional triggering to manage the cell, the UE side feeds back a corresponding configuration confirmation message to the network side according to a certain trigger condition in a process phase agreed by a protocol, so that the network side and the UE have a consistent understanding of the configuration.

Referring to Fig.5, which shows a flow of a configuration method according to an embodiment of the present disclosure. The method is executed by the target node, and specific steps thereof are as follows.

Step 501: receiving a second message transmitted by a source node, wherein the second message indicates whether a UE successfully accepts configuration information of one or more target cells, and/or the second message indicates whether the UE successfully accepts configuration information of a current serving cell, wherein the configuration information of each target cell corresponds to one or more trigger conditions using the configuration information of the target cell.

In the embodiments of the present disclosure, the source node and the target node may be respectively a source base station and a target base station during a handover process, or a source SN and a target SN in a DC; or a source MN and a target SN in the DC.

In the embodiments of the present disclosure, the above second message may also be referred to as a reconfiguration completion message, such as an RRC reconfiguration completion message.

In the embodiments of the present disclosure, the indication information in the second message includes one or any combination of: first indication information indicating whether the UE successfully accepts the first message; second indication information indicating whether the UE successfully accepts the configuration information of the current serving cell; third indication information indicating whether the UE successfully accepts configuration information of all target cells; one or more pieces of fourth indication information indicating whether the UE successfully accepts configuration information of a respective one of the target cells.

In the embodiments of the present disclosure, the second message includes a first information container including the third indication information.

In the embodiments of the present disclosure, the second message includes one or more second information containers, each of which includes a respective one of the pieces of fourth indication information.

In the embodiments of the present disclosure, when the second message indicates that the UE does not successfully accept the configuration information of the one or more target cells, the method further includes one or any combination of: releasing a second resource, wherein the second resource is reserved for the UE and corresponds to the configuration information of the one or more target cells that is not successfully accepted; transmitting configuration information of a new target cell to the source node, wherein the configuration information of the new target cell is transmitted by the source node to the UE; and re-executing a process of negotiating the configuration information of the new target cell between the target node and the source node.

In this way, it can be realized that after adopting a way of conditional triggering to manage the cell, the UE side feeds back a corresponding configuration confirmation message to the network side according to a certain trigger condition in a process phase agreed by a protocol, so that the network side and the UE have a consistent understanding of the configuration.

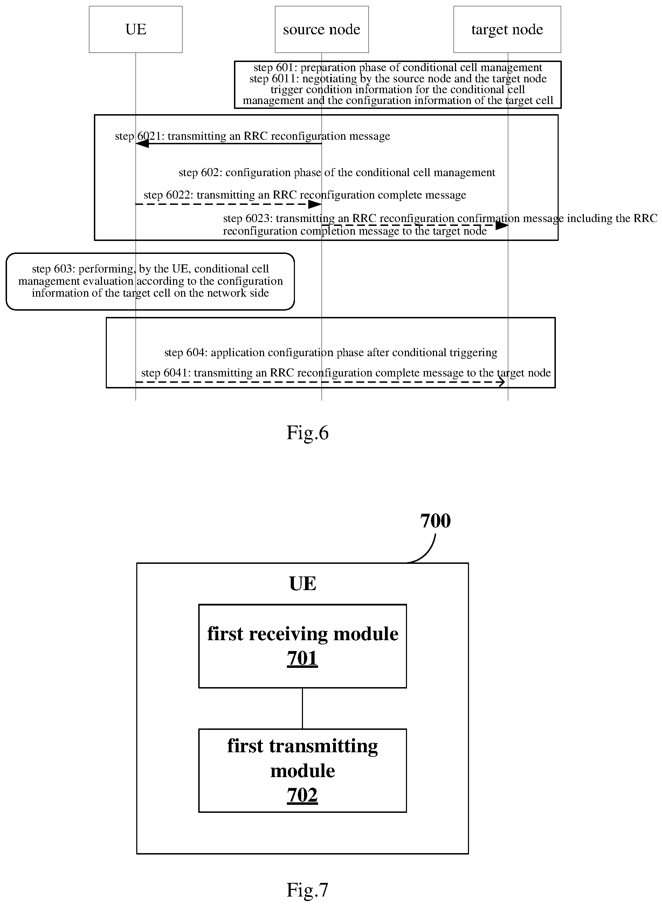

Referring to Fig.6, which illustrates a flow of another configuration method. The source node and the target node may be respectively a source base station and a target base station during a handover process; or the source node and the target node may be respectively a source SN and a target SN in a DC; or the source node and the target node may be respectively a source MN and a target SN in the DC.

Step 601: preparation phase of conditional cell management.

The step 601 includes step 6011.

Step 6011: negotiating by the source node and the target node trigger condition information for the conditional cell management and the configuration information of the target cell.

The conditional cell management means that the network side configures the trigger condition of the UE and the configuration information of the target cell, and after the UE evaluates that the configured trigger condition is satisfied, an operation, such as adding, deleting or changing operation, is performed on the target cell according to the configuration information of the target cell configured by the network. The evaluation of the trigger condition by the UE may include the evaluation of the measurement result of one or more cells by the UE. For example, a value of a measurement result of a certain cell meets a configured threshold. It should be noted that the threshold is not specifically limited in the embodiments of the present disclosure.

The configuration information of the target cell is a configuration of a corresponding target cell when an operation, such as an adding, deleting, or changing operation, is performed on the target cell after the UE meets the trigger condition.

Step 602: configuration phase of the conditional cell management.

The step 602 includes step 6021, step 6022, and step 6023.

Step 6021: transmitting by the source node an RRC reconfiguration (RRC Reconfiguration) message to the UE;

Specifically, after receiving configuration information of the one or more target cells of one or more target nodes based on conditional triggering, the source node transmits to the UE the RRC message after associating the trigger condition with the configuration information of the target cell. For example, the RRC message is an RRC reconfiguration message.

Optionally, the RRC message may include configuration information of the source node, for example, configuration information or reconfiguration information of a source cell.

Step 6022: transmitting by the UE an RRC reconfiguration complete (RRC Reconfiguration Complete) message to the source node.

Specifically, the UE transmits the reconfiguration completion message to the network side according to the configuration information of the target cell in step 6021.

Optionally, content of the RRC reconfiguration completion message includes one or any combination of: that the UE feeds back indication information indicating whether an entire RRC message is successfully accepted; that the UE feeds back indication information indicating whether the configuration information of the source node is successfully accepted; that with respect to configuration information of all target cells, the UE feeds back indication information indicating whether it is successfully accepted, for example, the RRC reconfiguration completion message includes an information container (container List), and the information container includes the indication information; with respect to the configuration information of each target cell, the UE feeds back indication information indicating whether configuration information of a target cell is successfully accepted, for example, the RRC reconfiguration completion message includes multiple information containers, which contain the indication information.

If the configuration information of the one or more target cells is reconfigured in failure (Reconfiguration failure), the UE may not trigger the connection re-establishment process, but feed back configuration failure information to the network side. The configuration failure information may be indication information indicating that the configuration information of the target cell is not successfully accepted

Step 6023: transmitting an RRC reconfiguration confirmation (RRC Reconfiguration Confirmation) message including the RRC reconfiguration completion message to the target node.

Specifically, according to the RRC reconfiguration completion message of the UE in the step 6022, the source node may choose to transmit to the target node the RRC reconfiguration completion message of the UE for the configuration information of the target cell. The RRC reconfiguration complete message is indication information indicating whether the UE successfully accepts the configuration information of the target cell.

The source node may store a content in the configuration completion message fed back by the UE in the information container and transmit it to the target node. For example, the RRC reconfiguration confirmation (RRC Reconfiguration Confirmation) message includes an information container, which includes indication information for the configuration information of the target cell transmitted by the UE to the source node.

After the target node receives the indication information, if the indication information indicates that the configuration information of the target cell is not successfully accepted, an operation of the target node includes one or any combination of: releasing resource that is reserved for the UE and corresponds to the configuration information of the target cell; transmitting the configuration information of the new target cell to the UE through the source node; and triggering the negotiation process of the step 601 again, and negotiating the configuration information of the new target cell with the source node.

When the source node transmits the indication information to the target node, if the configuration information of the target cell indicated by the UE is not successfully accepted, an operation of the source node includes one or any combination of: instructing the target node to release the resource that is reserved for the UE and corresponds to the configuration information of the target cell; and triggering the negotiation process of the step 601 again, and negotiating the configuration information of the new target cell with the source node.

Step 603: performing, by the UE, conditional cell management evaluation according to the configuration information of the target cell on the network side.

In the embodiments of the present disclosure, the conditional cell management evaluation can be realized in the related art, which will not be repeated herein.

Step 604: application configuration phase after conditional triggering;
The step 604 includes step 6041.

Step 6041: transmitting an RRC reconfiguration complete (RRC Reconfiguration Complete) message to the target node.

According to the step 603, after the UE meets the trigger condition, the configuration information of the target cell corresponding to the trigger condition is applied to transmit the RRC reconfiguration completion message to the target cell, and at same time, an access process (e.g., random access process) is initiated to the target cell.

Content in the RRC reconfiguration completion message includes any one of the following: a new RRC reconfiguration completion message generated according to the configuration information of the target cell (for example, RRC Reconfiguration).

If the UE generates an RRC reconfiguration completion message for the configuration information of the target cell in the step 6022, the UE saves the RRC reconfiguration completion message in the step 6022, and transmits the RRC reconfiguration completion message to the target node in the step 604.

In addition, if the UE generates and saves multiple RRC reconfiguration completion messages for the configuration information of the target cell in the step 6022, then the UE deletes other saved RRC reconfiguration completion messages before, during or after the UE transmits an RRC reconfiguration completion message to the target node.

In this way, it can be realized that after adopting a way of conditional triggering to manage the cell, the UE side feeds back a corresponding configuration confirmation message to the network side according to a certain trigger condition in a process phase agreed by a protocol, so that the network side and the UE have a consistent understanding of the configuration.

A UE is further provided in the embodiments of the present disclosure. Since a principle of solving a problem by the UE is similar to the configuration method in the embodiments of the present disclosure, an implementation of the UE may refer to an implementation of the method, and a description thereof will not be repeated herein.

Referring to Fig.7, a structure of UE 700 is shown, which includes: a first receiving module 701, used to receive a first message transmitted by a network side, wherein the first message includes configuration information of one or more target cells, and the configuration information of each target cell corresponds to one or more trigger conditions using the configuration information of the target cell; a first transmitting module 702, used to transmit a second message to the network side according to the configuration information of the one or more target cells, wherein the second message indicates whether the UE successfully accepts the configuration information of the one or more target cells.

In the embodiments of the present disclosure, optionally, the first message further includes configuration information of a current serving cell, and the second message further indicates whether the UE successfully accepts the configuration information of the current serving cell.

In the embodiments of the present disclosure, optionally, the first transmitting module 702 is further used to: determine whether the UE meets a trigger condition for successfully accepting the configuration information of the target cell; in the case that the UE meets the trigger condition for successfully accepting the configuration information of the target cell, transmit the second message to the target node when initiate an accessing process to the target cell. The second message indicates that the UE successfully accepts the configuration information of the target cell corresponding to the trigger condition using the configuration information of the target cell.

In the embodiments of the present disclosure, optionally, the first transmitting module 702 is further used to: generate the second message according to configuration information of a target cell corresponding to the trigger condition using the configuration information of the target cell, and transmit the second message to the target node; or select, according to the configuration information of the target cell corresponding to the trigger condition using the configuration information of the target cell, a corresponding second message from a plurality of second messages stored by the UE, and transmit the second message selected by the UE to the target node.

In the embodiments of the present disclosure, optionally, the UE 700 further includes: a deleting module used to, when transmitting the second message selected by the UE to the target node, or after transmitting the second message selected by the UE to the target node, or before transmitting the second message selected by the UE to the target node, determine, according to the configuration information of the target cell corresponding to the trigger condition using the configuration information of the target cell, another second message other than the second message selected by the UE from the plurality of second messages stored by the UE; delete the other second message.

In the embodiments of the present disclosure, the indication information in the second message includes one or any combination of: first indication information indicating whether the UE successfully accepts the first message; second indication information indicating whether the UE successfully accepts the configuration information of the current serving cell; third indication information indicating whether the UE successfully accepts configuration information of all target cells; one or more pieces of fourth indication information indicating whether the UE successfully accepts configuration information of a respective one of the target cells.

In the embodiments of the present disclosure, the second message includes a first information container including the third indication information.

In the embodiments of the present disclosure, the second message includes one or more second information containers, each of which includes a respective one of the pieces of fourth indication information.

In the embodiments of the present disclosure, the first message may include the configuration information of the source node, for example, the configuration information or the reconfiguration information of the source cell.

The UE provided by the embodiments of the present disclosure may execute the above method embodiments, and implementation principles and technical effects thereof are similar, a description thereof will not be repeated in this embodiment.

A source node is further provided in the embodiments of the present disclosure. Since a principle of solving a problem by the source node is similar to the configuration method in the embodiments of the present disclosure, an implementation of the source node may refer to an implementation of the method, and a description thereof will not be repeated herein.

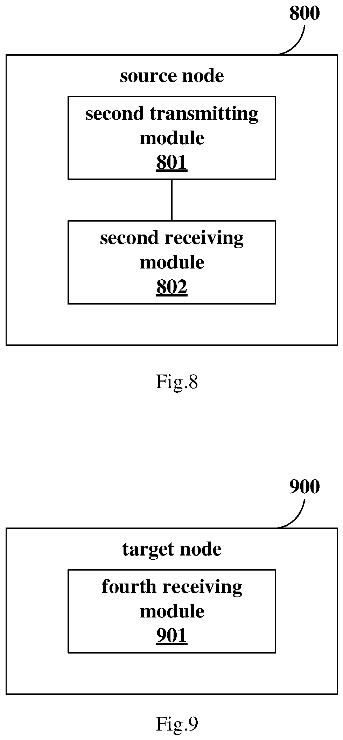

Referring to Fig.8, a structure of a source node 800 is shown, which includes: a second transmitting module 801, used to transmit a first message to a UE after receiving configuration information of one or more target cells, wherein the first message includes the configuration information of the one or more target cells, and the configuration information of each target cell corresponds to one or more trigger conditions using the configuration information of the target cell; a second receiving module 802, used to receive a second message transmitted by the UE according to the configuration information of the one or more target cells, wherein the second message indicates whether the UE successfully accepts the configuration information of the one or more target cells.

In the embodiments of the present disclosure, optionally, the first message further includes configuration information of a current serving cell, and the second message further indicates whether the UE successfully accepts the configuration information of the current serving cell.

In the embodiments of the present disclosure, the source node further includes: a determining module, used to determine the second message that is transmitted to the target node and indicates whether the configuration information of the target cell is successfully accepted; a second transmitting module, further used to transmit, to the target node, the second message indicating whether the configuration information of the target cell is successfully accepted.

In the embodiments of the present disclosure, the second transmitting module 801 is further used to: transmit a third message to the target node, wherein the third message includes a third information container, and the third information container includes the second message indicating whether the configuration information of the target cell is successfully accepted.

In the embodiments of the present disclosure, the source node further includes: a notification module, used to notify the target node to release a first resource when the second message indicates that the UE does not successfully accept the configuration information of the one or more target cells, wherein the first resource is reserved for the UE and corresponds to the configuration information of the one or more target cells that is not successfully accepted; and/or a first triggering module, used to re-execute a process of negotiating configuration information of a new target cell between the source node and the target node when the second message indicates that the UE does not successfully accept the configuration information of the one or more target cells.

In the embodiments of the present disclosure, the indication information in the second message includes one or any combination of: first indication information indicating whether the UE successfully accepts the first message; second indication information indicating whether the UE successfully accepts the configuration information of the current serving cell; third indication information indicating whether the UE successfully accepts configuration information of all target cells; one or more pieces of fourth indication information indicating whether the UE successfully accepts configuration information of a respective one of the target cells.

In the embodiments of the present disclosure, the second message includes a first information container including the third indication information.

In the embodiments of the present disclosure, the second message includes one or more second information containers, each of which includes a respective one of the pieces of fourth indication information.

In the embodiments of the present disclosure, the first message may include the configuration information of the source node, for example, the configuration information or the reconfiguration information of the source cell.

The source node provided by the embodiments of the present disclosure may execute the above method embodiments, and implementation principles and technical effects thereof are similar, a description thereof will not be repeated in this embodiment.

A target node is further provided in the embodiments of the present disclosure. Since a principle of solving a problem by the target node is similar to the configuration method in the embodiments of the present disclosure, an implementation of the target node may refer to an implementation of the method, and a description thereof will not be repeated herein.

Referring to Fig.9, a structure of a target node 900 is shown, which includes: a fourth receiving module 901, used to receive a second message transmitted by a source node, wherein the second message indicates whether a UE successfully accepts configuration information of one or more target cells, and/or the second message indicates whether the UE successfully accepts configuration information of a current serving cell, and the configuration information of each target cell corresponds to one or more trigger conditions using the configuration information of the target cell.

In the embodiments of the present disclosure, the target node further includes: a releasing module, used to release a second resource when the second message indicates that the UE does not successfully accept the configuration information of the one or more target cells, wherein the second resource is reserved for the UE and corresponds to the configuration information of the one or more target cells that is not successfully accepted; a fourth transmitting module, used to transmit configuration information of a new target cell to the source node when the second message indicates that the UE does not successfully accept the configuration information of the one or more target cells, wherein the configuration information of the new target cell is transmitted by the source node to the UE; and/or a second triggering module, used to re-execute a process of negotiating the configuration information of the new target cell between the target node and the source node when the second message indicates that the UE does not successfully accept the configuration information of the one or more target cells.

In the embodiments of the present disclosure, the indication information in the second message includes one or any combination of: first indication information indicating whether the UE successfully accepts the first message; second indication information indicating whether the UE successfully accepts the configuration information of the current serving cell; third indication information indicating whether the UE successfully accepts configuration information of all target cells; one or more pieces of fourth indication information indicating whether the UE successfully accepts configuration information of a respective one of the target cells.

In the embodiments of the present disclosure, the second message includes a first information container including the third indication information.

In the embodiments of the present disclosure, the second message includes one or more second information containers, each of which includes a respective one of the pieces of fourth indication information.

In the embodiments of the present disclosure, the first message may include the configuration information of the source node, for example, the configuration information or the reconfiguration information of the source cell.

The target node provided by the embodiments of the present disclosure may execute the above method embodiments, and implementation principles and technical effects thereof are similar, a description thereof will not be repeated in this embodiment.

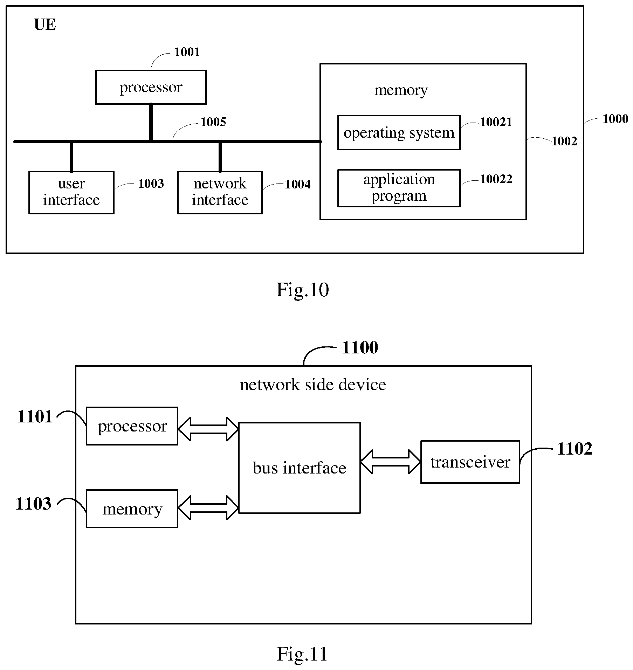

As shown in Fig. 10, the UE 1000 includes: at least one processor 1001, a memory 1002, at least one network interface 1004, a user interface 1003. Various components in the UE 1000 are coupled together by a bus system 1005. It should be appreciated that the bus system 1005 is used to implement connection communication between these components. In addition to a data bus, the bus system 1005 further includes a power bus, a control bus, and a status signal bus. However, for clarity of description, various buses are all labeled as the bus system 1005 in Fig. 10.

The user interface 1003 may include a display, a keyboard, or a pointing device (for example, a mouse, a trackball), a touch pad, or a touch screen, etc.

It should be appreciated that the memory 1002 in this embodiment of the present disclosure may be a volatile memory or a non-volatile memory, or may include both the volatile memory and the non-volatile memory. The nonvolatile memory may be a read-only memory (Read-Only Memory, ROM), a programmable ROM (Programmable ROM, PROM), an erasable PROM (Erasable PROM, EPROM), an electrically EPROM (Electrically EPROM, EEPROM) or a flash memory. The volatile memory may be a random access memory (Random Access Memory, RAM) which serves as an external high-speed cache. Illustratively but nonrestrictively, the RAM may be in various forms, e.g., static RAM (Static RAM, SRAM), dynamic RAM (Dynamic RAM, DRAM), synchronous DRAM (Synchronous DRAM, SDRAM), double data rate SDRAM (Double Data Rate SDRAM, DDRSDRAM), enhanced SDRAM (Enhanced SDRAM, ESDRAM), synchronous link DRAM (Synchronous Link DRAM, SLDRAM) or direct Rambus RAM (Direct Rambus RAM, DRRAM). The memory 1002 of the systems and methods described in the embodiments of the present disclosure is intended to include, without being limited to, these and any other suitable types of memories.

In some embodiments, the memory 1002 stores the following elements, executable modules or data structures, or a subset thereof, or an extended set thereof: an operating system 10021 and an application program 10022.

The operating system 10021 includes various system programs, such as a framework layer, a core library layer and a driver layer, for implementing various basic services and processing hardware-based tasks. The application program 10022 includes various applications, such as a media player (Media Player) and a browser (Browser), for implementing various application services. A program implementing the method of the embodiments of the present disclosure may be included in the application program 10022.

In the embodiments of the present disclosure, a program or instruction stored in the memory 1002, specifically, a program or instruction stored in the application program 10022 is called and executed, to implement the following steps: receiving a first message transmitted by a network side, wherein the first message includes configuration information of one or more target cells; transmitting a second message to the network side according to the configuration information of the one or more target cells, wherein the second message indicates whether the UE successfully accepts the configuration information of the one or more target cells.

The UE provided by the embodiments of the present disclosure may execute the above method embodiments, and implementation principles and technical effects thereof are similar, a description thereof will not be repeated in this embodiment.

Referring to Fig.11, another network side device 1100 is provided by an embodiment of the present disclosure, including: a processor 1101, a transceiver 1102, a memory 1103, a user interface 1104, and a bus interface.

The processor 1101 may be responsible for managing bus architecture and general processing. The memory 1103 may store data used by the processor 1101 when performing operations.

In the embodiments of the present disclosure, the network side device 1100 may further include: a computer program stored in the memory 1103 and capable of being executed by the processor 1101, wherein the processor 1101 is used to execute the computer program to implement the steps of the method provided by the embodiments of the present disclosure.

In Fig.11, the bus architecture may include any number of interconnected buses and bridges, specifically various circuits of one or more processors represented by the processor 1101 and memories represented by the memory 1103 are linked together. The bus architecture may also link together various other circuits such as a peripheral device, a voltage regulator, and a power management circuit, etc., which are known in the art, and thus are not further described in the embodiments of the present disclosure. The bus interface provides an interface. The transceiver 1102 may be a plurality of elements, that is, including a transmitter and a receiver, and provide a unit for communicating with various other devices on the transmission medium.

Steps of a method or an algorithm described in combination with the present disclosure may be implemented in hardware, or may be implemented in a software instruction executed by a processor. The software instruction may be composed of a corresponding software module, and the software module may be stored in a RAM, flash memory, ROM, EPROM, EEPROM, register, hard disk, mobile hard disk, read-only optical disk, or any other form of storage medium known in the art. An exemplary storage medium is coupled to the processor, so that the processor can read information from, and write information to, the storage medium. Naturally, the storage medium may also be a part of the processor. The processor and the storage medium may be arranged in an application specific integrated circuit (ASIC). In addition, the ASIC may be arranged in a core network interface device. Naturally, the processor and the storage medium may also exist in the core network interface device as discrete components.

A person skilled in the art should appreciate that, in one or more of the above examples, the functions described in the present disclosure may be implemented in hardware, software, firmware, or any combination thereof. When being implemented in software, the functions may be stored on a computer-readable medium or transmitted as one or more instructions or codes on the computer-readable medium. The computer-readable medium includes a computer storage medium and a communication medium, wherein the communication medium includes any medium that facilitates transfer of a computer program from one place to another. The storage medium may be any available medium that may be accessed by a general-purpose or special-purpose computer.

Specific implementations described above further describe objectives, technical solutions, and beneficial effects of the present disclosure in detail. It should be understood that the above descriptions are merely specific implementations of the present disclosure, and are not intended to limit the protection scope of the present disclosure. Any modification, equivalent replacement, or improvement, and the like made based on the technical solutions of the present disclosure shall be included in the protection scope of the present disclosure.

A person skilled in the art should understand that the embodiments of the present disclosure may be provided as a method, a system, or a computer program product. Therefore, the embodiments of the present disclosure may take a form of entirely hardware embodiments, entirely software embodiments, or embodiments combining software and hardware. Moreover, the embodiments of the present disclosure may take a form of a computer program product implemented on one or more computer-usable storage medium (including but not limited to disk storage, compact disc (CD)-ROM, optical storage, etc.) containing computer-usable program code.

The embodiments of the present disclosure are described with reference to flowcharts and/or block diagrams of methods, devices (systems), and computer program products according to the embodiments of the present disclosure. It should be appreciated that each flow and/or block in the flowcharts and/or block diagrams, and combinations of flows and/or blocks in the flowcharts and/or block diagrams can be implemented by computer program instructions. These computer program instructions may be provided to a processor of a general-purpose computer, a special-purpose computer, an embedded processor, or other programmable data processing device to produce a machine, so that instructions executed by the processor of the computer or the other programmable data processing device are used to generate a device for implementing functions specified in one or more flows of the flowchart and/or one or more blocks of the block diagram.

These computer program instructions may also be stored in a computer-readable storage capable of directing a computer or other programmable data processing device to operate in a specific manner, so that the instructions stored in the computer-readable storage produce a product including an instruction device. The instruction device implements functions specified in one or more flows of the flowchart and/or one or more blocks of the block diagram.

These computer program instructions may also be loaded onto the computer or the other programmable data processing device, so that a series of operational steps may be performed on the computer or the other programmable device to generate a computer-implemented process, and the computer or the other programmable device executes the instructions to provide steps for implementing functions specified in one or more flows of the flowchart and/or one or more blocks of the block diagram.

Obviously, a person skilled in the art can make various modifications and variations to the embodiments of the present disclosure without departing from the spirit and scope of the present disclosure. Thus, when these modifications and variations of the embodiments of the present disclosure fall within the scope of the claims and their equivalent of the present disclosure, the present disclosure also intends to include these modifications and variations.

## Claims

1. A configuration method, operable by a User Equipment (UE), comprising:
receiving a first message transmitted by a network side, wherein the first message comprises configuration information of one or more target cells;
transmitting a second message to the network side according to the configuration information of the one or more target cells,
wherein the second message indicates whether the UE successfully accepts the configuration information of the one or more target cells.

2. The configuration method according to claim 1, wherein the first message further comprises configuration information of a current serving cell, and the second message further indicates whether the UE successfully accepts the configuration information of the current serving cell.

3. The configuration method according to claim 1, wherein transmitting the second message to the network side according to the configuration information of the one or more target cells comprises:
determining whether the UE meets a trigger condition for successfully accepting the configuration information of the target cell;
in the case that the UE meets the trigger condition for successfully accepting the configuration information of the target cell, transmitting the second message to the target node when initiating an accessing process to the target cell.

4. The configuration method according to claim 3, wherein transmitting the second message to the target node comprises:
generating the second message according to configuration information of a target cell corresponding to the trigger condition, and transmitting the second message to the target node; or
selecting, according to the configuration information of the target cell corresponding to the trigger condition, a corresponding second message from a plurality of second messages stored by the UE, and transmitting the second message selected by the UE to the target node.

5. The configuration method according to claim 4, wherein when transmitting the second message selected by the UE to the target node, or after transmitting the second message selected by the UE to the target node, or before transmitting the second message selected by the UE to the target node, the method further comprises:
determining, according to the configuration information of the target cell corresponding to the trigger condition, another second message other than the second message selected by the UE from the plurality of second messages stored by the UE;
deleting the other second message.

6. The configuration method according to claim 2, wherein indication information in the second message comprises one or any combination of:
first indication information indicating whether the UE successfully accepts the first message;
second indication information indicating whether the UE successfully accepts the configuration information of the current serving cell;
third indication information indicating whether the UE successfully accepts configuration information of all target cells;
one or more pieces of fourth indication information, wherein each piece of fourth indication information indicates whether the UE successfully accepts configuration information of a respective one of the target cells.

7. The configuration method according to claim 6, wherein the second message comprises a first information container comprising the third indication information.

8. The configuration method according to claim 6, wherein the second message comprises one or more second information containers, each of which comprises a respective one of the pieces of fourth indication information.

9. A configuration method, operable by a source node, comprising:
transmitting a first message to a UE after receiving configuration information of one or more target cells, wherein the first message comprises the configuration information of the one or more target cells;
receiving a second message transmitted by the UE according to the configuration information of the one or more target cells,
wherein the second message indicates whether the UE successfully accepts the configuration information of the one or more target cells.

10. The configuration method according to claim 9, wherein the first message further comprises configuration information of a current serving cell, and the second message further indicates whether the UE successfully accepts the configuration information of the current serving cell.

11. The configuration method according to claim 9, further comprising:
determining the second message that is transmitted to the target node and indicates whether the configuration information of the target cell is successfully accepted;
transmitting, to the target node, the second message indicating whether the configuration information of the target cell is successfully accepted.

12. The configuration method according to claim 11, wherein transmitting to the target node the second message indicating whether the configuration information of the target cell is successfully accepted comprises:
transmitting a third message to the target node, wherein the third message comprises a third information container, and the third information container comprises the second message indicating whether the configuration information of the target cell is successfully accepted.

13. The configuration method according to claim 9, wherein when the second message indicates that the UE does not successfully accept the configuration information of the one or more target cells, the method further comprises one or any combination of:
notifying the target node to release a first resource, wherein the first resource is reserved for the UE and corresponds to the configuration information of the one or more target cells that is not successfully accepted; and
re-executing a process of negotiating configuration information of a new target cell between the source node and the target node.

14. The configuration method according to claim 10, wherein the indication information in the second message comprises one or any combination of:
first indication information indicating whether the UE successfully accepts the first message;
second indication information indicating whether the UE successfully accepts the configuration information of the current serving cell;
third indication information indicating whether the UE successfully accepts configuration information of all target cells;
one or more pieces of fourth indication information, wherein each piece of fourth indication information indicates whether the UE successfully accepts configuration information of a respective one of the target cells.

15. The configuration method according to claim 14, wherein the second message comprises a first information container comprising the third indication information.

16. The configuration method according to claim 14, wherein the second message comprises one or more second information containers, each of which comprises a respective one of the pieces of fourth indication information.

17. A configuration method, operable by a target node, comprising:
receiving a second message transmitted by a source node,
wherein the second message indicates whether a UE successfully accepts configuration information of one or more target cells, and/or the second message indicates whether the UE successfully accepts configuration information of a current serving cell.

18. The configuration method according to claim 17, wherein when the second message indicates that the UE does not successfully accept the configuration information of the one or more target cells, the method further comprises one or any combination of:
releasing a second resource, wherein the second resource is reserved for the UE and corresponds to the configuration information of the one or more target cells that is not successfully accepted;
transmitting configuration information of a new target cell to the source node, wherein the configuration information of the new target cell is transmitted by the source node to the UE; and
re-executing a process of negotiating the configuration information of the new target cell between the target node and the source node.

19. The configuration method according to any one of claims 17 and 18, wherein the indication information in the second message comprises one or any combination of:
first indication information indicating whether the UE successfully accepts the first message;
second indication information indicating whether the UE successfully accepts the configuration information of the current serving cell;
third indication information indicating whether the UE successfully accepts configuration information of all target cells;
one or more pieces of fourth indication information indicating whether the UE successfully accepts configuration information of a respective one of the target cells.

20. The configuration method according to claim 19, wherein the second message comprises a first information container comprising the third indication information.

21. The configuration method according to claim 19, wherein the second message comprises one or more second information containers, each of which comprises a respective one of the pieces of fourth indication information.

22. A UE, comprising:
a first receiving module, used to receive a first message transmitted by a network side, wherein the first message comprises configuration information of one or more target cells;
a first transmitting module, used to transmit a second message to the network side according to the configuration information of the one or more target cells,
wherein the second message indicates whether the UE successfully accepts the configuration information of the one or more target cells.

23. The UE according to claim 22, wherein the first message further comprises configuration information of a current serving cell, and the second message further indicates whether the UE successfully accepts the configuration information of the current serving cell.

24. The UE according to claim 22, wherein the first transmitting module is further used to:
determine whether the UE meets a trigger condition for successfully accepting the configuration information of the target cell;
in the case that the UE meets the trigger condition for successfully accepting the configuration information of the target cell, transmit the second message to the target node when initiate an accessing process to the target cell.

25. The UE according to claim 24, wherein the first transmitting module is further used to:
generate the second message according to configuration information of a target cell corresponding to the trigger condition, and transmit the second message to the target node; or
select, according to the configuration information of the target cell corresponding to the trigger condition, a corresponding second message from a plurality of second messages stored by the UE, and transmit the second message selected by the UE to the target node.

26. The UE according to claim 25, further comprising a deleting module used to,
when transmitting the second message selected by the UE to the target node, or after transmitting the second message selected by the UE to the target node, or before transmitting the second message selected by the UE to the target node, determine, according to the configuration information of the target cell corresponding to the trigger condition, another second message other than the second message selected by the UE from the plurality of second messages stored by the UE;
delete the other second message.

27. A source node, comprising:
a second transmitting module, used to transmit a first message to a UE after receiving configuration information of one or more target cells, wherein the first message comprises the configuration information of the one or more target cells;
a second receiving module, used to receive a second message transmitted by the UE according to the configuration information of the one or more target cells,
wherein the second message indicates whether the UE successfully accepts the configuration information of the one or more target cells.

28. The source node according to claim 26, wherein the first message further comprises configuration information of a current serving cell, and the second message further indicates whether the UE successfully accepts the configuration information of the current serving cell.

29. The source node according to claim 27, further comprising:
a determining module, used to determine the second message that is transmitted to the target node and indicates whether the configuration information of the target cell is successfully accepted;
a second transmitting module, further used to transmit, to the target node, the second message indicating whether the configuration information of the target cell is successfully accepted.

30. The source node according to claim 29, wherein the second transmitting module is further used to:
transmit a third message to the target node, wherein the third message comprises a third information container, and the third information container comprises the second message indicating whether the configuration information of the target cell is successfully accepted.

31. The source node according to claim 27, further comprising:
a notification module, used to notify the target node to release a first resource when the second message indicates that the UE does not successfully accept the configuration information of the one or more target cells, wherein the first resource is reserved for the UE and corresponds to the configuration information of the one or more target cells that is not successfully accepted; and/or
a first triggering module, used to re-execute a process of negotiating configuration information of a new target cell between the source node and the target node when the second message indicates that the UE does not successfully accept the configuration information of the one or more target cells.

32. A target node, comprising:
a fourth receiving module, used to receive a second message transmitted by a source node,
wherein the second message indicates whether a UE successfully accepts configuration information of one or more target cells, and/or the second message indicates whether the UE successfully accepts configuration information of a current serving cell.

33. The target node according to claim 32, further comprising:
a releasing module, used to release a second resource when the second message indicates that the UE does not successfully accept the configuration information of the one or more target cells, wherein the second resource is reserved for the UE and corresponds to the configuration information of the one or more target cells that is not successfully accepted;
a fourth transmitting module, used to transmit configuration information of a new target cell to the source node when the second message indicates that the UE does not successfully accept the configuration information of the one or more target cells, wherein the configuration information of the new target cell is transmitted by the source node to the UE; and/or
a second triggering module, used to re-execute a process of negotiating the configuration information of the new target cell between the target node and the source node when the second message indicates that the UE does not successfully accept the configuration information of the one or more target cells.

34. A UE, comprising: a processor, a memory, and a computer program stored in the memory and capable of being executed by the processor, wherein the processor is used to execute the computer program to implement the steps of the configuration method according to any one of claims 1 to 8.

35. A network side device, comprising: a processor, a memory, and a computer program stored in the memory and capable of being executed by the processor, wherein the processor is used to execute the computer program to implement the steps of the configuration method according to any one of claims 9 to 16, or to implement the steps of the configuration method according to any one of claims 17 to 21.

36. A computer-readable storage medium storing therein a computer program, wherein the computer program is used to be executed by a processor to implement the steps of the configuration method according to any one of claims 1 to 8, or to implement the steps of the configuration method according to any one of claims 9 to 16, or to implement the steps of the configuration method according to any one of claims 17 to 21.
